Europäisches Patentamt

European Patent Office

Office européen des brevets

(11) Veröffentlichungsnummer : **0 126 399**
**B1**

(12) **EUROPÄISCHE PATENTSCHRIFT**

(45) Veröffentlichungstag der Patentschrift :
30.12.86

(21) Anmeldenummer : 84105407.5

(22) Anmeldetag : 12.05.84

(51) Int. Cl.⁴ : **F 15 D   1/02**, F 02 K   1/00,
B 64 C 15/00

(54) **Strömungskanal kurzer Baulänge.**

(30) Priorität : **13.05.83 DE 3317378**

(43) Veröffentlichungstag der Anmeldung :
**28.11.84 Patentblatt 84/48**

(45) Bekanntmachung des Hinweises auf die Patenterteilung : **30.12.86 Patentblatt 86/52**

(84) Benannte Vertragsstaaten :
**BE FR GB IT LU NL**

(56) Entgegenhaltungen :
GB-A-  781 466
GB-A-  792 993
GB-A- 1 166 292
US-A- 3 174 709

(73) Patentinhaber : **Robertson GAL Gesellschaft für angewandte Lufttechnik mbH
Friedrich-Ebert-Strasse 27
D-4052 Korschenbroich (DE)**

(72) Erfinder : **Morschheuser, Wilhelm Fritz
Winkelsmühler Weg 10
D-4006 Erkrath (DE)**

(74) Vertreter : **Plöger, Ulrich, Dipl.-Ing.
Benrather Schlossallee 89
D-4000 Düsseldorf-Benrath (DE)**

## Beschreibung

Die Erfindung bezieht sich auf einen Strömungskanal kurzer Baulänge für eine im wesentlichen symmetrische Verzweigung eines in einen Eintrittskanal eintretenden Gasstromes in zwei zueinander etwa parallele sowie voneinander beabstandete Teilströme, wobei der Eintrittsströmung in der Strömungsmitte die innenseitigen Wände der Verzweigungskanäle gegenüberliegen, deren außenseitigen Wände derart in den Eintrittskanal übergehen, daß die Strömung eine allmählich zunehmende Einschnürung bis zu ihrer weiteren Umlenkung in die Austrittsströmungsrichtung erfährt.

Ein Strömungskanal dieser Art ist nach der GB-A-1166292 bekannt. Dabei gehen die beiden Verzweigungskanäle unter Ausbildung allmählich zunehmender Einschnürungen von einem angeflanschten Eintrittskanal aus und münden schließlich in Düsenkammern ein. Der Eintrittskanal verbindet ihre einander zugekehrten, innenseitigen Wandabschnitte unter Ausbildung einer zur Längsrichtung des Eintrittskanals nahezu senkrechten Prallfläche, die strömungstechnisch ausgesprochen verlustreich ist. Weitere Druckverluste führt die Strömung im Bereich der anschließenden Umlenkung innerhalb der Verzweigungskanäle, wobei sie schließlich am Austritt aus den Verzweigungskanälen wiederum parallel zur Strömung verläuft, wie sie im Eintrittskanal besteht. Trotz der extrem stumpfwinkligen Strömungsverzweigung beträgt bei diesem Strömungskanal die Baulänge noch mehr als der 1,8-fache Durchmesser des Eintrittskanals, gemessen an der Stelle seines Flansches. Der Druckverlust läßt sich durch Verwendung eines strömungstechnisch zweckmäßigeren, spitzwinkligen Trennkeils anstelle einer Prallplatte verringern, wie ihn beispielsweise die GB-A-781 466 vorsieht. Der Trennkeil hat hierbei eine ausgesprochen scharfe Kante mit einem Trennwinkel von 80° oder etwas mehr. Für derartige Trennkeile nimmt aber die Verzweigung verhältnismäßig viel Raum ein, so daß die Forderung einer kurzen Baulänge nicht mehr verwirklicht werden kann. Eine kurze Baulänge wiederum ist einzuhalten bei der Verzweigung eines heißen Brenngases auf mehrere Schubdüsen, wobei häufig noch das Problem zu lösen ist, durch unterschiedliche Beaufschlagung mit der einzelnen Schubdüsen zu einer Steuerung zu kommen. Auch auf der Ansaugseite muß man häufig mit einer kurzen Baulänge auskommen, wenn beispielsweise von einem gemeinschaftlichen Strömungskanal mehrere Turbinen versorgt werden müssen, oder aber wenn bei einem Dachlüfter die durch einen auf eine Rechtecköffnung aufgesetzten Schacht abzuführende Luftströmung zunächst aus Gründen eines Regenschutzes mit einem keilförmigen, sogenannten negativen Dach, überdeckt ist, wobei eine derartige Überdeckung zu einer Strömungsverzweigung führt, die in der Regel sehr verlustreich verläuft.

Weitere, nach der GB-A-792 993 bekannt gewesene, in axialer Richtung des abzulenkenden Strahles beaufschlagbare Ablenkplatten oder innerhalb eines Austrittskanals verschwenkbare Drosselklappen, die einen Düsenstrahl in eine zu seiner Achse schräge Richtung gemäß der US-A-3 174 709 umlenken, führen nicht zu einem Strömungskanal mit einer Verzweigung in zwei zum eintretenden Gasstrom etwa parallele Teilströme, wie sie zur Gattung der Erfindung zählen. Hinzu kommt, daß durch Ablenkplatten einerseits und Leitschaufeln andererseits bewirkte Strömungsumlenkungen in radialer bzw. in axialer Richtung sehr raumgreifend ausfallen.

Demgegenüber liegt der Erfindung die Aufgabe zugrunde, einen Strömungskanal der einleitend beschriebenen Art so auszubilden, daß einerseits die bleibenden Druckverluste weitgehend vermieden werden, und daß andererseits in der Strömungsrichtung nur sehr kurze Baulängen bestehen, wobei sich gleichfalls unsymmetrische Strömungsverzweigungen ausführen lassen sollen.

Diese Aufgabe wird durch die Erfindung, wie sie im Patentanspruch 1 gekennzeichnet ist, gelöst.

Die vor den stumpfwinkligen Trennkeil aus dem Eintrittskanal auftreffende Gasströmung erfährt zunächst eine stark ausgeprägte Abbremsung. Durch die allmähliche Einschnürung im Bereich der Verzweigungskanäle wird die infolge der Abbremsung stark beunruhigte Strömung weitgehend vergleichmässigt. Hierzu tragen zusätzlich die Leitschaufeln bei, die über die am stärksten eingeschnürte Umlenkungsstelle notwenigerweise strömungsaufwärts und strömungsabwärts verlängert sind. Austrittsseitig werden Strömungsverluste dadurch vermieden, daß die Verzweigungskanäle nach der Umlenkung wiederum stetig erweitert sind. Man kommt auf diese Weise zu einer Austrittsströmung, die zur Eintrittsströmung praktisch parallel verläuft, wobei sie jedoch infolge ihrer Verzweigung an verhältnismäßig weit voneinander entfernten Stellen auszutreten vermag. Die allmähliche Einschnürung der Strömung in den Verzweigungskanälen mit anschließender stetiger Erweiterung führt dazu, daß in den Verzweigungskanälen praktisch keine Knickpunkte bestehen. Man kann auf diese Weise insbesondere stetig ineinander übergehende Kurvenabschnitte verwirklichen, die sowohl strömungstechnisch als auch mechanisch den Erfordernissen anpaßbar sind. Insbesondere wird auf diese Weise eine Strömungsrichtung extrem kurzer Baulänge erreicht. Wenn das Innenmaß, also der Durchmesser oder bei rechteckigem Querschnitt die Breite des Eintrittskanals, mit 1 R angegeben wird, läßt sich auf diese Weise eine Baulänge von etwa 1,4 R und eine Spreizung der Strömung bis auf etwa 3 R vornehmen.

Die Herabsetzung von Strömungsverlusten wird dann besonders wirkungsvoll, wenn die Verzweigungskanäle, ausgehend von einem 2/3-Querschnitt des Eintrittskanalquerschnittes, bis auf etwa 1/2 dieses Querschnittes bei einem Winkel zwischen ihren Wänden von etwa 10° verjüngt werden ; in diesem Falle beträgt der Keilwinkel etwa 120°. Austrittsseitig erfolgt die Erweiterung dann mit größerem Winkel von etwa 25°. Diese Maßverhältnisse erlauben die Einhaltung von knickfreien Übergängen der einzelnen Abschnitte des Strömungskanals. Hierbei werden die Verzweigungskanäle auf ihrer inneren Seite mit 0,05 R und auf ihrer äußeren Seite mit 0,61 R im Bericht ihres engsten Querschnittes gekrümmt. Dazwischen liegende Leitschaufeln erhalten eine Krümmung von 0,28 R, im Anschluß an welche Krümmung sie strömungsabwärts und Strömungsaufwärts geradflächig in Strömungsrichtung verlaufen. Die Leitschaufeln sind nach einem weiteren Merkmal der Erfindung derart verschwenkbar an einer kurz vor der Umlenkung der Verzweigungskanäle gelegenen Stelle gelagert, daß sie wahlweise in der einen Einstellung den jeweiligen Verzweigungskanal abzusperren vermögen, während sie in der anderen Endstellung den Strömungsquerschnitt im Verhälts von etwa 1/3 zu 2/3 aufteilen, wobei 1/3 des Strömungsquerschnittes auf der inneren, stärker umgelenkten Seite des Verzweigungskanals besteht. Somit wird der neue Strömungskanal den an ihn gestellten Bedingungen auch dann gerecht, wenn die Strömung des Eintrittskanals ungleichmäßig auf beide Verzweigungskanäle verteilt werden muß. Um auch eintrittsseitig Druckverluste zu vermeiden, ist der Eintrittskanal mit einer abgerundeten Einlaufkante versehen. Für die Abrundung kommt insbesondere ein Krümmungsradius von etwa 0,05 R in Frage. Danach ist der Einlaufkanal als ein unter einem Winkel von 7° divergierender Diffusor ausgeführt.

Die vorgeschlagenen Krümmungsmaße führen zu einem insgesamt stetigen Kurvenverlauf. Man kann daher nicht nur die strömungstechnischen Beziehungen genau erfassen, sondern auch das mechanische Verhalten des Strömungskanals berechnen, indem die Schwerpunktlage, Neigung der Hauptträgheitsachsen, Trägheitsmomente, Biegewiderstandsmomente und dergl. mathematisch zu ermitteln sind.

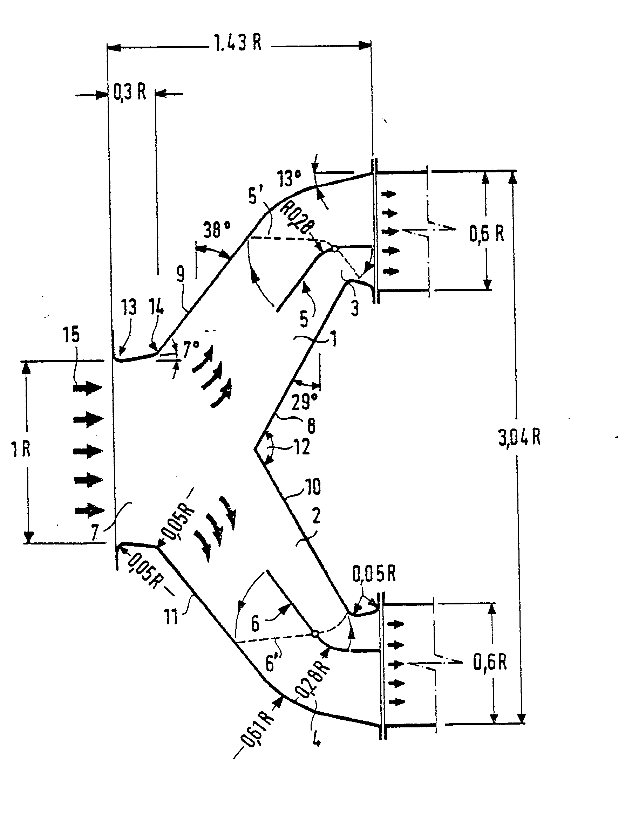

Zur Veranschaulichung der Erfindung wird auf die Zeichnung Bezug genommen, welche den neuen Strömungskanal im Querschnitt zeigt. Es kann sich hierbei sowohl um eine runde Ausführungsform als auch um eine rechteckige Ausführungsform handeln. Wenngleich in der Zeichnung der Eintrittskanal horizontal liegt, kann er auch vertikal angeordnet sein, zum Beispiel bei Anordnung auf der Öffnung eines Daches für Entlüftungszwecke.

Der Strömungskanal beginnt mit dem Eintrittskanal 7, für den die Innenweite R besteht. Die Strömung tritt mit gleichmäßiger Geschwindigkeitsverteilung entsprechend den Pfeilen 15 in den Eintrittskanal ein. Die Einlaufkante 13 ist mittels Viertelkreisbögen von einem Krümmungsradius 0,05 R abgerundet. Weiterhin ist der Diffusorwinkel mit 7° für die Divergenz des Eintrittskanals erkennbar.

Der dem Eintrittskanal austrittsseitig gegenüberliegende Trennkeil ist mit einem stumpfen Keilwinkel 12 von etwa 120° ausgebildet. Da der Einlaufkanal nur eine Länge von etwa 0,3 R aufweist, ist der Abstand zum Trennkeil verhältnismäßig kurz. Der Trennkeil wird von den Innenwänden 8 und 10 der Verzweigungskanäle 1 und 2 gebildet. Diesen Innenwänden 8 und 10 liegen die Außenwände 9 und 11 gegenüber. Letztere schließen sich mit einer Krümmung 14, deren Radius 0,05 R beträgt, austrittsseitig an den Eintrittskanal 7 an.

Die Verzweigungskanäle 1, 2 haben zunächst große Eintrittsquerschnitte von etwa 2/3 des Querschnittes des Eintrittskanals. Bei den zeichnerisch wiedergegebenen Winkelmaßen für die Innen- und Außenwände der Verzweigungskanäle von 29° bzw. 38° gegenüber einer Vertikalen laufen die Innen- und Außenwände untere einem Winkel von 10° aufeinander zu. Zugleich ergibt sich aus dem Winkel der Innenwände 8, 10 gegenüber der Vertikalen, daß der Keilwinkel 12 etwa 120° beträgt. Die Innen- und Außenwände erfahren im Anschluß an die Bereiche der Umlenkung 3, 4 eine Verbreiterung unter einem Winkel von etwa 25°. Man erkennt dies aus dem für die Außenwand 9 des oberen Verzweigungskanals 1 eingezeichneten Divergenzwinkel von 13° gegenüber der Horizontalen.

In den Bereichen der Umlenkung 3, 4 sind die Leitschaufeln 5, 6 strömungstechnisch wirksam angeordnet. Dies wird dadurch erreicht, daß sie eine Krümmung aufweisen, die zwischen der inneren Umlenkungskrümmung mit 0,05 R und der äußeren Umlenkungskrümmung mit 0,61 R liegt und 0,28 R beträgt. Weiterhin ist wesentlich, daß die Leitschaufeln den Krümmungsquerschnitt in den Verzweigungskanälen im Verhältnis von etwa 1/3 zu 2/3 aufteilen wobei 1/3 auf der inneren, stärkeren umgelenkten Seite des Verzweigungskanals liegt.

Da Druckverluste auch unter dem Gesichtspunkt einer ungleichmäßigen Strömungsaufteilung im Sinne der Erfindung vermieden werden sollen, sind die Leitschaufeln 5, 6 weiterhin verschwenkbar gelagert. Sie können nicht nur ihre in der Zeichnung mit vollen Strichen wiedergegebene Lage einnehmen, sondern wahlweise auch die mit 5' und 6' bezeichnete Stellung einnehmen. In den letztgenannten Stellungen sperren sie den jeweiligen Verzweigungskanal vollständig ab. Sie werden in diese Stellungen in Richtung der Schwenkpfeile geklappt und durch Anschläge fixiert.

Im oberen Verzweigungskanal ist dargestellt, daß eine Leitschaufel 5 insgesamt verschwenkbar sein kann. Demgegenüber zeigt der untere Verzweigungskanal eine abgewandelte Ausführungsform, bei welcher die Leitschaufel austrittsseitig als feststehender Abschnitt ausgeführt ist. Demgegenüber ist der eintrittsseitige sowie der Krümmungsabschnitt verschwenkbar. In beiden Fällen führt die Verschwenkung in ihrer Endstellung zum Verschluß der Verzweigungsleitung. Man kann darüber hinaus auch die austrittsseitige Strömung weitergehend beeinflussen, indem Zwischenstellungen der Leitschaufeln gewählt werden. Für den Anschluß an zu- und abführende Bauteile sind Befestigungsflanschen beim Eintrittskanal und bei den Verzweigungskanälen vorgesehen.

## Patentansprüche

1. Strömungskanal kurzer Baulänge für einen im wesentlichen symmetrische Verzweigung eines in einen Eintrittskanal (7) eintretenden Gasstromes in zwei zueinander etwa parallele sowie voneinander beabstandete Teilströme, wobei der Eintrittsströmung in der Strömungsmitte die innenseitigen Wände (8, 10) der Verzweigungskanäle (1, 2) gegenüberliegen, deren außenseitigen Wände (9, 11) derart in den Eintrittskanal (7) übergehen, daß die Strömung eine allmählich zunehmende Einschnürung bis zu ihrer weiteren Umlenkung (3, 4) in die Austrittsströmungsrichtung erfährt, dadurch gekennzeichnet, daß die innenseitigen Wände (8, 10) der Verzweigungskanäle (1, 2) in der Strömungsmitte gemeinschaftlich einen stumpfwinkligen Trennkeil (12) bilden, dessen Spitze der eintretenden Strömung entgegengerichtet ist, daß im Anschluß an die Strömungsteilung im Bereich der weiteren Strömungsumlenkung (3, 4) gekrümmte Leitschaufeln (5, 6) vorgesehen sind, die außerhalb ihrer Krümmung geradlinig verlaufen, und daß die Verzweigungskanäle (1, 2) im Anschluß an die weitere Umlenkung (3, 4) stetig erweitert sind.

2. Strömungskanal nach Anspruch 1, dadurch gekennzeichnet, daß die Verzweigungskanäle (1, 2) am Übergang in den Eintrittskanal jeweils etwa 2/3 von dessen Querschnitt aufweisen und sich bis auf etwa 1/2 dieses Querschnittes mit einem zwischen ihren Wänden (8, 9 bzw. 10, 11) etwa 10° betragende Winkel verjüngen, wobei der Keilwinkel (12) etwa 120° beträgt.

3. Strömungskanal nach den Ansprüchen 1 und 2, dadurch gekennzeichnet, daß sich die Verzweigungskanäle (1, 2) austrittseitig unter einem zwischen ihren Wänden (8, 9 bzw. 10, 11) bestehenden Winkel von etwa 25° erweitern.

4. Strömungskanal nach den Ansprüchen 1 bis 3, dadurch gekennzeichnet, daß die Leitschaufeln (5, 6) derart verschwenkbar an einer kurz vor der Umlenkung (3, 4) der Verzweigungskanäle (1, 2) gelegenen Stelle gelagert sind, daß sie wahlweise in der einen Endstellung (5', 6') den jeweiligen Verzweigungskanal (1, 2) abzusperren vermögen, während sie in der anderen Endstellung den Strömungsquerschnitt im Verhältnis von etwa 1/3 zu 2/3 aufteilen, wobei 1/3 des Strömungsquerschnittes auf der inneren, stärker umgelenkten Seite des Verzweigungskanals (1, 2) besteht.

5. Strömungskanal nach den Ansprüchen 1 bis 4, dadurch gekennzeichnet, daß der Eintrittskanal (7) von der Innenweiter mit einer in Form eines Viertelkreisbogens mit einem Krümmungsradius von 0,05 R ausgeführten abgerundeten Einlaufkante (13) sowie mit einem unter einem Winkel von 7° divergierenden Diffusor ausgebildet ist.

6. Strömungskanal nach den Ansprüchen 1 bis 5, dadurch gekennzeichnet, daß die Umlenkung der Verzweigungskanäle (1, 2) auf ihrer inneren Seite mit 0,05 R und auf ihrer äußeren Seite mit 0,61 R ausgeführt ist, während die Leitschaufeln (5, 6) dazwischen mit 0,28 R gekrümmt sind, wohingegen letztere im Anschluß an die Krümmung strömungsabwärts und strömungsaufwärts geradflächig in Strömungsrichtung verlaufen.

7. Strömungskanal nach den Ansprüchen 4 bis 6, dadurch gekennzeichnet, daß für die Leitschaufeln (5, 6) in ihren beiden Endstellungen Anschläge vorgesehen sind.

8. Strömungskanal nach den Ansprüchen 1 bis 7, dadurch gekennzeichnet, daß der Eintrittskanal (7) einlaufseitig und die Verzweigungskanäle (1, 2) austrittsseitig mit Befestigungsflanschen versehen sind.

## Claims

1. Fluid duct presenting a construction of reduced length for branching essentialy symmetrically a flow of gas flowing into an entrance duct (7) into two partial flows being parallel and spaced in respect to each other, with the inside walls (8, 10) of the branched ducts (1, 2) opposed to the entrance flow in the center of the flow, whereas the outside walls (9, 11) of the branched ducts (1, 2) thus adjoin the entrance duct (7) that the flow restricts gradually increasing till to a further deflection (3, 4) into the direction of exit, characterized by the feature that the inside walls (8, 10) of the branched ducts (1, 2) form a common diverting edge (12) in the center of the flow, the apex of which edge (12) is opposed to the entrance flow, and that there are arcuate blades (5, 6) following the further deflection of flow (3, 4) which blades being rectilinear following their curvatures and that the branched ducts (1, 2) are continuously diverging following the further deflection (3, 4).

2. Fluid duct according to claim 1, characterized by the feature, that the branched ducts (1, 2) are provided at their passages into the entrance duct each with a cross section that equals approximately 2/3 of the entrance ducts' cross section, diminishing to approximately 1/2 of said cross section with an angel between their walls (8, 9 resp. 10, 11) of about 10°, and with the angel at the apex of the edge being about 120°.

3. Fluid duct according to claim 1 and 2, characterized by the feature, that the branched ducts (1, 2) at their exit ends diverge under an angel of about 25° between their respective walls (8, 9 resp. 10, 11).

4. Fluid duct according to claim 1 to 3, characterized by the feature, that the blades (5, 6) are jounalled before the deflection (3, 4) of the branched ducts (1, 2) for selectively closing in their one end position (5', 6') the respective branched duct (1 resp. 2) and diverting in their other end position the cross section for flow into a relation of 1/3 to 2/3 with 1/3 of said cross section for flow being on the inner side of the branched duct (1, 2) which inner side is more deflected.

5. Fluid duct according to claim 1 to 4, characterized by the feature, that the entrance duct (7) with the inner width (R) is provided with a rounded entrance brim (13) in form of a quarter of a circle with a radius of curvature that equals 0,05 R and with a diffuser diverging under an angel of 7°.

6. Fluid duct according to claim 1 to 5, characterized by the feature, that the deflection of the branched ducts (1, 2) is provided on the respective inner sides thereof under a curvature of 0,05 R and on the outer sides thereof under a curvature of 0,61 R, with the blades curved therebetween with a curvature of 0,28 R, said blades being rectilinear adjoining said curvature in the direction of flow as well upwardly as downwardly of said flow.

7. Fluid duct according to claim 4 to 6, characterized by the feature, that there are provided stops for the blades (5, 6) in both of their end position.

8. Fluid duct according to claim 1 to 7, according by the feature, that the entrance duct (7) at the end of entrance and the branched ducts (1, 2) at their ends of exit are provided with fastening flanges.

## Revendications

1. Canal de courant de courte longueur de l'ouvrage pour un branchement essentiellement symétrique d'un courant de gaz entrant dans un canal d'entrée (7) en deux courants partiels aussi bien parallèles que distancés l'un de l'autre, donc les parois intérieures (8, 10) des canaux de branchement (1, 2) se trouvent opposées — au centre du courant — au courant d'entrée, dont les parois extérieures (9, 11) passent au canal d'entrée (7) de telle manière que le courant subit une contraction augmentante successivement jusqu'à sa dérivation (3, 4) en la direction du courant de sortie caractérisé par le fait que les parois intérieures (8, 10) des canaux de branchement (1, 2) forment ensemble dans le centre du courant une clavette séparative (12) à angle obtus, donc la pointe est dirigée vers le courant entrant, qu'à la suite de la séparation du courant dans la zone de la déviation du courant (3, 4) des pales directives courbées (5, 6) sont prévues, qui en dehors de leur courbure sont placées de manière rectiligne, et que les canaux de branchement (1, 2) après une autre déviation (3, 4) vont en élargissant constamment.

2. Procédé suivant la revendication 1 caractérisé par le fait que les canaux de branchement (1, 2) présentent, au passage dans le canal d'entrée chaque fois env. 2/3 de la section de celui-ci tout en diminuant à env. 1/2 de cette section, et ce par un angle d'env. de 10° situé entre leurs parois (8, 9 ou 10, 11) où l'angle de la clavette (12) est d'env. 120°.

3. Procédé suivant les revendications 1 et 2 caractérisé par le fait que les canaux de branchement (1, 2) s'élargissent du côté de sortie par un angle d'env. 25° existant entre ses parois.

4. Procédé suivant les revendications 1 à 3 caractérisé par le fait que les pales directives (5, 6) soient orientables à un endroit directement avant la déviation (3, 4) des canaux de branchement (1, 2) qu'elles soient par sélection à même de bloquer le canal de branchement respectif dans une des positions finales (5', 6') pendant qu'elles divisent dans l'autre position finale la section du courant à raison d'env. 1/3 à 2/3, où 1/3 de la section du courant existant sur le côté intérieur avec une déviation plus accentuée du canal de branchement (1, 2).

5. Procédé suivant les revendications 1 à 4 caractérisé par le fait que le canal d'entrée (7) est formé en ce qui concerne la largeur intérieure R tel que le bord d'écoulement d'entrée arrondi (13) en forme d'un quart d'arc de cercle ayant un rayon de courbure de 0,05 R ainsi qu'avec un diffuseur divergeant avec un angle de 7°.

6. Procédé suivant les revendications 1 à 5 caractérisé par le fait que la dérivation des canaux de branchement (1, 2) étant exécutée à son côté intérieur avec 0,05 R et à son côté extérieur avec 0,61 R, pendant que les pales directrices (5, 6) vont, après la courbure, en aval et en amont à face droite en direction du courant.

7. Procédé suivant les revendications 4 à 6 caractérisé par le fait que des butées sont prévues pour les pales directrices (5, 6) dans leurs deux positions finales.

8. Procédé suivant les revendications 1 à 7 caractérisé par le fait que le canal d'entrée (7) est prévu avec des brides de fixation au côté d'entrée et aux canaux de branchement (1, 2) au côté sortie.